# EUROPÄISCHE PATENTSCHRIFT

(11) **EP 2 868 468 B1**
(45) Veröffentlichungstag und Bekanntmachung des Hinweises auf die Patenterteilung: **26.05.2021**
(21) Anmeldenummer: 14177935.5
(22) Anmeldetag: 22.07.2014
(51) Int. Cl.: B32B 5/02

(54) **DIFFUSIONSOFFENE DACHUNTERSPANNBAHN**
PERMEABLE SARKING FELT
ÉCRAN DE SOUS-TOITURE PERMÉABLE À LA VAPEUR

(30) Priorität: 07.08.2013 DE 102013108521
(43) Veröffentlichungstag der Anmeldung: 06.05.2015
(73) Patentinhaber: BMI Steildach GmbH, 61440 Oberursel (Taunus) (DE)
(72) Erfinder: Sauerbier, Axel, 70825 Korntal-Münchingen (DE)
(74) Vertreter: Grundmann, Dirk

(56) Entgegenhaltungen:
- EP-A2- 1 207 244
- DE-A1- 19 918 439
- DE-A1-102010 026 155

## Beschreibung

Die Erfindung betrifft eine Dachunterspannbahn mit einem flächigen Träger, einer darauf angeordneten wasserdichten, aber wasserdampfdurchlässigen Sperrschicht und einer auf der Sperrschicht angeordneten Deckschicht.

Eine Dachunterspannbahn der zuvor beschriebenen Art ist aus der EP 1 207 244 B1 bekannt. Der Träger wird von einem Tragvlies ausgebildet, bei dem es sich um ein Vlies aus Polyethylen oder Polypropylen oder Polyester handelt. Auf dieses Vlies wird ein Heißkleber aufgebracht. Als Deckschicht besitzt diese Dachunterspannbahn ein dünnes Deckvlies ebenfalls aus Polypropylen. Der Aufbau einer Dampfbremse aus einem Vlies wird auch in der DE 10 2010 026 155 A1 beschrieben. Die in Rede stehenden Dachunterspannbahnen werden beispielsweise bei Steildachkonstruktionen verwendet. Auf Dachsparren wird die Dachunterspannbahn verlegt. Aneinander angrenzende Dachunterspannbahnen werden mit einem Klebeband miteinander verklebt, welches Klebeband die beiden Dachunterspannbahnen überlappt. Auf die Dachunterspannbahn wird dachaußenseitig die äußere Dachhaut insbesondere in Form von Dacheindeckungsplatten aufgebracht. Dachinnenseitig befindet sich unter der Dachunterspannbahn die Dachdämmung aus Mineralwolle oder dergleichen. Die Dachunterspannbahn ist wasserundurchlässig, damit Regenwasser oder Schwitzwasser traufseitig ablaufen kann und nicht in die Dämmung hindurchdringt. Die Dachunterspannbahn ist aber wasserdampfdurchlässig, um Wasserdampf aus der Dämmung nach außen treten zu lassen. Die gattungsgemäße Sperrschicht besteht aus einem quellfähigen Kunststoff, in den von der Dachinnenseite Feuchtigkeit eindringen kann. Diese Feuchtigkeit kann durch die Sperrschicht zur Dachaußenseite hindurch diffundieren.

Die DE 19918439 A1 beschreibt einen wasserdichten, wasserdampfdurchlässigen Kunststofffilm bestehend aus einem Polypropylen-melt-blown-Vliesstoff. Die vom Vliesstoff ausgebildeten Mikrofasern sollen eine Matrix durchsetzen, wobei einzelne Mikrofasern von der Oberfläche der Matrix abstehen und Faserinseln bilden.

Beim Stand der Technik besteht das Material des Deckvlieses aus Polypropylen oder aus Polyethylen. Diese beiden Werkstoffe sind nicht optimal mit einem Acrylatkleber zu verkleben, wie er bei Klebebändern verwendet wird. Diese verbesserungswürdigen Verklebeeigenschaften beruhen nicht nur darauf, dass die Verklebung meist nur auf den Hochpunkten des Vlieses stattfindet, sondern auch auf einer ungünstigen Oberflächenspannung der Werkstoffe Polypropylen und Polyethylen gegenüber dem Acrylatkleber.

Der Erfindung liegt die Aufgabe zugrunde, eine gattungsgemäße Dachunterspannbahn hinsichtlich ihrer Verklebeeigenschaften zu verbessern.

Gelöst wird die Aufgabe durch die in den Ansprüchen angegebene Erfindung.

Zunächst und im Wesentlichen wird vorgeschlagen, dass die Deckschicht zumindest überwiegend aus Polyester besteht. Sie kann aber auch zu 100 Prozent aus Polyester bestehen. Der Aufbau der Dachunterspannbahn kann grundsätzlich so erfolgen, wie er in der gattungsbildenden Schrift beschrieben wird, d. h. auf ein Tragvlies, welches überwiegend aus Polypropylen oder Polyethylen besteht, wird im heißen Zustand eine Schmelze einer Sperrschicht aufgebracht, die beispielsweise aus EVA, EMAC, EBAC aus PE oder aus PP besteht oder eine andere Zusammensetzung besitzt, wie sie in der EP 1 207 244 B1 beschrieben ist, weshalb der Offenbarungsgehalt dieser Schrift voll mit in den Offenbarungsgehalt dieser Patentanmeldung mit einbezogen wird. Auf die Sperrschicht wird das Deckvlies aufgebracht, welches gemäß einem ersten Aspekt der Erfindung anders als beim Stand der Technik ein Polyestervlies ist. Sowohl das Tragvlies als auch das Deckvlies bilden als Folge ihrer Vliesstruktur einen lufteintrittsfähigen Träger aus mit Lufteintrittsöffnungen. In diese Lufteintrittsöffnungen migriert bei der Fertigung der Heißkleber. Er bildet dadurch nicht nur die aktive Sperrschicht, sondern auch das Verbindungsmedium zwischen den beiden Vliesen. Der Träger der Dachunterspannbahn weist bei der Verlegung der Dachunterspannbahn zu den Dachsparren. Er bildet somit die Unterseite der Dachunterspannbahn. Die Deckschicht bildet hingegen die Oberseite der Dachunterspannbahn und bildet erfindungsgemäß Klebeverbindungsflächen aus, die überwiegend aus Polyester bestehen. Diese Klebeverbindungsflächen dienen dem Anhaften eines Acrylatklebers eines Klebebandes. Die Erfindung betrifft somit bevorzugt auch eine Dachunterspannbahn, die unter Verwendung eines derartigen Klebebandes mit einer benachbarten Dachunterspannbahn verklebt ist, wobei das Klebeband jeweils an Klebeverbindungsflächen der jeweiligen Deckschicht anhaftet. Besonders vorteilhaft ist, dass die Sperrschicht bis in die Bereiche der Oberfläche der Dachunterspannbahn durch das Deckvlies hindurch migriert. Die dachaußenseitige Oberfläche der Dachunterspannbahn wird dadurch nicht nur von den einzelnen Fasern des Deckvlieses, sondern auch von Abschnitten der Sperrschicht ausgebildet. Hierdurch wird die Oberfläche gewissermaßen egalisiert. Durch die Verwendung eines dünnen, flächig relativ offenen Polyestervlieses wird somit eine teilweise Durchdringung des Sperrschichtwerkstoffs in das Vlies erreicht. Es entsteht eine kombinierte Oberfläche, die sich abwechselnde Oberflächenabschnitte aus verschiedenen Werkstoffen ausbildet, wobei ein Werkstoff polyesterhaltig ist und der andere Werkstoff nicht polyesterhaltig ist. Zwischen den einzelnen Vliesfasern, insbesondere Polyesterfasern bildet sich ein teilweise glatter Oberflächenabschnitt aus, der bevorzugt von Polypropylen oder Polyethylen ausgebildet ist, nämlich von der Sperrschicht. Die Klebeverbindung zwischen einem Acrylatkleber, wie er bei Klebestreifen oder bei Kartuschenklebern verwendet wird, mit einer Polyesteroberfläche hat eine größere Abschälfestigkeit als eine Acrylat-Polyethylen oder Acrylat-Polypropylen Materialpaarung. Eine Verbesserung der Verklebbarkeit beruht nicht nur auf der neuen Materialpaarung Polyester/Acrylatkleber, sondern auch optional auf der wechselnden Oberfläche des Substrates. Quasi im Millimeterabstand wechseln Oberflächenstrukturen der Bahn. Die Flächenabschnitte aus dem Vlieswerkstoff, beispielsweise reinem Polyester bzw. Flächenabschnitte der Sperrschicht, die aus Nichtpolyester bestehen, sind jeweils bevorzugt maximal 5 mm² groß, bevorzugt lediglich maximal 1 mm² groß. Diese sich abwechselnden Bereiche aus polyesterhaltigem Werkstoff und nicht polyesterhaltigem Werkstoff lassen ein einfaches Abziehen eines Klebestreifens kaum zu. Vor allem ein schnelles, ruckartiges Ablösen ist kaum möglich. Abschälend wirkende Kräfte haben es dabei im ständigen Wechsel mit variierenden Abzugseigenschaften des Klebebandes am Substrat zu tun. Bei einer Klebeverbindung einer Klebeschicht eines Klebebandes mit einer homogen ausgestalteten Oberfläche wirken zum Beginn eines Abschälprozesses hohe Anfangskräfte. Ist der Abschälprozess einmal in Gang gekommen, so sind die nachfolgend wirkenden Abschälkräfte, um das Klebeband vom Substrat abzuziehen, erheblich geringer als die Anfangskräfte. Wegen der variierenden Oberflächeneigenschaften der zufolge einer Weiterbildung der Erfindung ausgebildeten Dachunterspannbahn wirken bei einer Abschälung ständig die Initialabschälkräfte. Die Abschälkräfte hängen von der Temperatur und von den physikalischen äußeren Gegebenheiten ab. Ruckartige Windböen bewirken eine hohe Abschälgeschwindigkeit. Die thermische Ausdehnung bzw. Schrumpfung von Dachunterspannbahn bzw. Klebeband führen zu einer langsam wirkenden Kraft. Mit der erfindungsgemäßen Ausgestaltung wird eine deutlich höhere Haftwirkung erzielt, die zu deutlich höheren Schälwerten führt als beim Stand der Technik. Ein Polyesterdeckvlies hat darüber hinaus die Eigenschaft, Wasser auf der Dachunterspannbahn besser verteilen zu können. Nach einer Beregnung verbleibende Restfeuchte verteilt sich als Folge der hydrophilen Eigenschaft des Polyesterdeckvlieses schnell über die gesamte Oberfläche. Die Restfeuchte perlt nicht auf der Oberfläche ab, sondern verteilt sich dort als dünner Film, was zu einer deutlich schnelleren Abtrocknung nach einer Beregnung führt. Das dünne Polyestervlies, welches mit einem Flächengewicht von 5 bis 40 g/m² verwendet wird, bildet einen Haftvermittler zwischen einem Klebeband, einem Kartuschenkleber und der Sperrschicht. Die Sperrschicht greift in das Polyestervlies ein, dessen Fasern teilweise freiliegend über die Oberfläche der Sperrschicht ragen und teilweise in der Sperrschicht eingebettet sind. Der Anteil freiliegenden Polyestervlieses an der Oberfläche liegt optimal zwischen 20 und 80 Prozent. Die Sperrschicht hat ein Flächengewicht zwischen 15 und 50 g/m² und ist wasserdampfdurchlässig aber wasserundurchlässig. Sie verbindet das Deckvlies mit dem Tragvlies, dessen Flächengewicht zwischen 30 und 150 g/m² beträgt.

Ein Ausführungsbeispiel der Erfindung wird nachfolgend anhand beigefügter Zeichnungen erläutert. Es zeigen:
- Fig. 1: schematisch und nicht maßstabgerecht den Querschnitt durch eine Dachunterspannbahn und

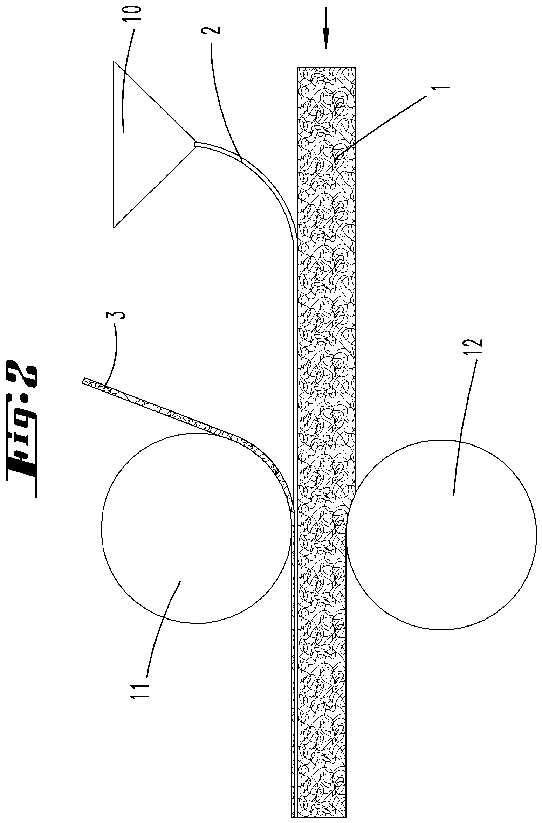

- Fig. 2: schematisch und nicht maßstabgerecht das Herstellverfahren der Dachunterspannbahn.

Von einer nicht dargestellten Rolle wird ein aus Polypropylen bestehendes Tragvlies 1 mit einem Flächengewicht von 115 g/m² abgezogen und durch einen Walzenspalt zwischen zwei Walzen 11, 12 hindurchgeleitet. Vor dem Walzenspalt wird mittels einer Breitschlitzdüse 10 ein sogenanntes Dampfbrems-Coating mit etwa 35 g/m² auf das Tragvlies 1 aufgebracht. Der Auftrag erfolgt dabei im heißen geschmolzenen Zustand des PVA-, PE- und PP-Anteile aufweisenden Dampfbrems-Coatings.

Auf das noch heiße Coating, welches die Sperrschicht 2 bildet, wird dann ein Polyestervlies mit einem Flächengewicht von 5 bis 40 g/m² aufgelegt. Im Spalt zwischen den Walzen 11, 12 wird das flüssige Coating bereichsweise in das Polyesterdeckvlies 3 und in das Polypropylenträgervlies 1 hineingedrückt. Es bilden sich dabei die Migrationszonen 7 und 4 aus.

In der Migrationszone 7 durchdringt die Sperrschicht 2 nur geringfügig das Tragvlies 1. In der Migrationszone 4 durchdringt die Sperrschicht 2 das Deckvlies 3 bis zu dessen Oberseite, so dass aber noch einzelne Fasern aus der Sperrschicht 2 herausragen. Die Oberfläche der Dachunterspannbahn wird somit auf der Dachaußenseite von zwei verschiedenen Materialien ausgebildet, nämlich von Abschnitten 5, die aus dem Werkstoff des Deckvlieses, also insbesondere Polyester bestehen und von dazwischen liegenden Abschnitten 6, die von Oberflächenabschnitten der Sperrschicht 2 ausgebildet sind und die andere Benetzungseigenschaften wie die Oberflächenabschnitte 5 besitzen. Das Deckvlies 3 bildet gewissermaßen eine Armierung der Sperrschicht 2, die bereichsweise über die Oberfläche der Sperrschicht 2 hinausragt. Der Heißkleber durchdringt die Deckschicht 3 stellenweise vollständig.

Wird ein Klebeband 8, welches an seiner Unterseite aus einer Klebeschicht aus Acrylat besteht, auf die Oberseite der Dachunterspannbahn aufgebracht, so bilden sich verschieden starke Haftverbindungen zwischen der Oberfläche der Klebeschicht 9 und den voneinander verschiedenen aber eng zueinander benachbarten Oberflächenabschnitten 5, 6 der Oberfläche der Dachunterspannbahn aus. In den Bereichen, in denen die Klebeschicht 9 in berührender Anlage an die Sperrschichtoberfläche 6 tritt, bildet sich eine geringe Haftverbindung aus, die unter Aufwendung von geringen Abschälkräften gelöst werden kann. Im Bereich der aus der Sperrschichtoberfläche 6 herausragenden Faserabschnitte 5 des Deckvlieses 3 bilden sich stark haftende Klebeverbindungen zur Klebeschicht 9 aus, die nur mit höheren Abschälkräften gelöst werden können.

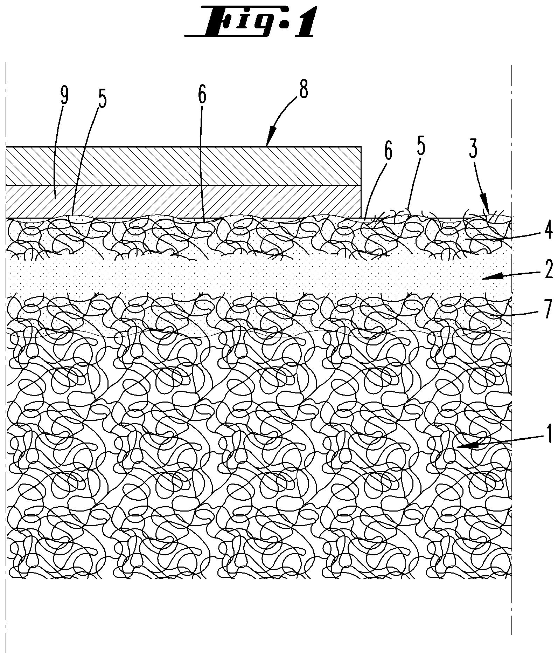

Die Figur 1 zeigt einen gepunkteten Querschnittsbereich 2, der die Sperrschicht darstellt. Die Sperrschicht 2 besitzt eine zum Tragvlies 1 weisende Zone 7, in der die Fasern des Tragvlieses 1 in die Sperrschicht 2 hineinragen. Die Sperrschicht 2 besitzt auch eine zur Oberseite der Dachunterspannbahn weisende Zone 4, in die Fasern des Deckvlieses 3 hineinragen. Zwischen den beiden Zonen 4 und 7 befindet sich eine Sperrzone der Sperrschicht 2, in die keine Fasern hineinragen.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

### Bezugszeichenliste

- 1: Tragvlies
- 2: Sperrschicht
- 3: Deckvlies
- 4: Migrationszone
- 5: Oberflächenabschnitt
- 6: Oberflächenabschnitt
- 7: Migrationszone
- 8: Klebeband
- 9: Klebeschicht
- 10: Düse
- 11: Walze
- 12: Walze

## Patentansprüche

1. Dachunterspannbahn mit einem die bei der Verlegung der Dachunterspannbahn zu den Dachsparren weisenden Unterseite bildenden Tragvlies (1), einer darauf angeordneten wasserdichten, aber wasserdampfdurchlässigen Sperrschicht (2) und einem auf der Sperrschicht (2) angeordneten, Deckvlies (3), das zumindest überwiegend aus Polyester besteht, wobei die Sperrschicht ein kein Polyester beinhaltender Heiß-Schmelz-Klebefilm (2) ist, der zumindest bereichsweise in das Tragvlies (1) und das Deckvlies (3) migriert ist und so das Tragvlies (1) mit dem Deckvlies (3) verbindet, und sich bis zur Oberseite der Dachunterspannbahn erstreckt, so dass die Oberseite sowohl von Abschnitten (6) der Sperrschicht (2) als auch von Abschnitten (5) des Deckvlieses (3) gebildet ist und Klebeverbindungsflächen zum Anhaften eines Acrylatklebers eines Klebebandes ausbildet.

2. Dachunterspannbahn nach Anspruch 1, **dadurch gekennzeichnet, dass** 20 bis 80 Prozent der Oberfläche der Dachunterspannbahn von einem Polyester-Werkstoff gebildet sind und der übrige Bereich der Oberfläche von einem Kunststoff, der keinen Polyesteranteil besitzt und insbesondere PE-, PP- oder EVA-Anteile besitzt.

3. Dachunterspannbahn nach einem der Ansprüche 1 oder 2, **dadurch gekennzeichnet, dass** das Deckvlies (3) ein Polyestervlies mit einem Flächengewicht von 5 bis 40 g/m² ist.

4. Dachunterspannbahn nach einem der Ansprüche 1 bis 3, **dadurch gekennzeichnet, dass** die Sperrschicht (2) ein Flächengewicht von 15 bis 50 g/m² aufweist.

5. Dachunterspannbahn nach einem der Ansprüche 1 bis 4, **dadurch gekennzeichnet, dass** das insbesondere aus Polypropylen bestehende Trägervlies (1) eine Grammatur zwischen 30 und 150 g/m² besitzt.

6. Dachunterspannbahn nach einem der Ansprüche 1 bis 5, **dadurch gekennzeichnet, dass** sich zusammenhängende Oberflächenabschnitte aus Polyester oder aus Nichtpolyester maximal 5 mm² groß sind, bevorzugt maximal 1 mm² groß sind.

7. Dachunterspannbahn, insbesondere auf einer Dachunterkonstruktion aufgebrachte Dachunterspannbahn nach einem der vorhergehenden Ansprüche, **gekennzeichnet durch** ein auf die Deckschicht (3) aufgebrachtes Klebeband mit einem Acrylatkleber, mit dem die Dachunterspannbahn mit einer benachbarten Dachunterspannbahn verbunden ist, wobei die Klebeschicht des Klebebandes an den aus Polyester bestehenden Klebeverbindungsflächen der Deckschichten (3) beider Dachunterspannbahnen anhaftet.

## Claims

1. Roofing underlayment comprising a carrier fleece (1) that forms the underside facing the rafters when the roofing underlayment is being laid, a waterproof but water-vapor-permeable barrier layer (2) arranged thereon, and a cover fleece (3) which is arranged on the barrier layer (2) and consists at least predominantly of polyester, wherein the barrier layer is a hot-melt adhesive film (2) which does not contain polyester and which has migrated, at least in some regions, into the carrier fleece (1) and the cover fleece (3) so that the carrier fleece (1) connects to the cover fleece (3), and said barrier layer extends to the top side of the roofing underlayment, such that the top side is formed both by portions (6) of the barrier layer (2) and by portions (5) of the cover fleece (3) and forms adhesive bonding surfaces for adhering an acrylate adhesive of an adhesive tape.

2. Roofing underlayment according to claim 1, **characterised in that** 20 to 80 percent of the surface of the roofing underlayment is made of a polyester material and the remaining region of the surface is made of a plastics material that does not have a polyester proportion and in particular has PE, PP or EVA proportions.

3. Roofing underlayment according to either claim 1 or claim 2, **characterised in that** the cover fleece (3) is a polyester fleece having a weight per unit area of 5 to 40 g/m².

4. Roofing underlayment according to any of claims 1 to 3, **characterised in that** the barrier layer (2) has a weight per unit area of 15 to 50 g/m².

5. Roofing underlayment according to any of claims 1 to 4, **characterised in that** the carrier fleece (1) consisting in particular of polypropylene has a grammage between 30 and 150 g/m².

6. Roofing underlayment according to any of claims 1 to 5, **characterised in that** contiguous surface portions made of polyester or of non-polyester have a maximum size of 5 mm², preferably a maximum size of 1 mm².

7. Roofing underlayment, in particular roofing underlayment according to any of the preceding claims applied to a roof substructure, **characterised by** an adhesive tape which is applied to the cover layer (3) and comprises an acrylate adhesive, by means of which the roofing underlayment is connected to an adjacent roofing underlayment, the adhesive layer of the adhesive tape adhering to the adhesive bonding surfaces, consisting of polyester, of the cover layers (3) of the two roofing underlayments.

## Revendications

1. Bande de sous-toiture avec un non-tissé de support (1) formant la face inférieure tournée vers les chevrons lors de la pose de la bande de sous-toiture, une couche barrière (2) étanche à l'eau mais perméable à la vapeur d'eau, qui est agencée sur celle-ci, et un non-tissé de couverture (3) agencé sur la couche barrière (2), qui est constitué au moins majoritairement de polyester, dans laquelle la couche barrière est un film adhésif thermofusible (2) ne contenant pas de polyester, qui a migré au moins par endroits dans le non-tissé de support (1) et dans le non-tissé de couverture (3) et relie ainsi le non-tissé de support (1) au non-tissé de couverture (3), et s'étend jusqu'à la face supérieure de la bande de sous-toiture de sorte que la face supérieure est formée à la fois par des parties (6) de la couche barrière (2) et par des parties (5) du non-tissé de couverture (3) et forme des surfaces de liaison adhésive pour l'adhésion d'un adhésif acrylique d'une bande adhésive.

2. Bande de sous-toiture selon la revendication 1, **caractérisée en ce que** 20 à 80 % de la surface de la bande de sous-toiture est formée par un matériau polyester et la région restante de la surface est formée par une matière plastique qui ne comporte pas de part de polyester et qui comporte en particulier des parts de PE, PP ou EVA.

3. Bande de sous-toiture selon l'une des revendications 1 ou 2, **caractérisée en ce que** le non-tissé de couverture (3) est un non-tissé de polyester avec un poids par unité de surface de 5 à 40 g/m².

4. Bande de sous-toiture selon l'une des revendications 1 à 3, **caractérisée en ce que** la couche barrière (2) a un poids par unité de surface de 15 à 50 g/m².

5. Bande de sous-toiture selon l'une des revendications 1 à 4, **caractérisée en ce que** le non-tissé de support (1) constitué en particulier de polypropylène, a un grammage compris entre 30 et 150 g/m².

6. Bande de sous-toiture selon l'une des revendications 1 à 5, **caractérisée en ce que** des parties de surface continues en polyester ou en non-polyester ont une taille maximale de 5 mm², de préférence de 1 mm² au maximum.

7. Bande de sous-toiture, en particulier bande de sous-toiture selon l'une des revendications précédentes appliquée sur une sous-structure de toit, **caractérisée par** une bande adhésive avec un adhésif acrylique appliquée sur la couche de couverture (3), avec laquelle la bande de sous-toiture est reliée à une bande de sous-toiture adjacente, la couche adhésive de la bande adhésive adhérant aux surfaces de liaison adhésive constituées de polyester des couches de couverture (3) des deux bandes de sous-toiture.
